# EUROPEAN PATENT APPLICATION

(11) **EP 1 204 190 A2**
(43) Date of publication of application: **08.05.2002**
(21) Application number: 01204038.2
(22) Date of filing: 24.10.2001
(51) Int. Cl.: H02J 9/06

(54) **Apparatus for emergency power supply**

(30) Priority: 25.10.2000 IT RM000563
(71) Applicant: Alka S.r.l., 20090 Cusago, Milano (IT)
(72) Inventor: Ricciardi, Franco, 20010 Cornaredo (Milano) (IT)
(74) Representative: Maggioni, Claudio

(57) **Abstract**

An apparatus for emergency power supply to the starter motor of a motor vehicle comprising a switch (10) having two pairs of terminals which are connected by electrical leads (5-8) to contact terminals (1, 3; 2, 4) for coupling to the battery of the motor vehicle and to an external battery. The switch (10) can be switched to an open state or to one or other of two closed states (direct or crosswise) by an electronic circuit (13) which identifies the polarities of the terminals and sets the switch to one or other closed state in order to connect the terminals having the same polarity to each other. In order to avoid overloads, the circuit (13) detects a current which is greater than a predetermined value and, by means of a timer (13-4) and a control circuit (13-3), switches the switch (10) to the open state when the current which is greater than the predetermined value lasts longer than a predetermined period of time. The circuit (13) can also prevent the switch from being closed for a predetermined period of time after a signal for opening the switch.

## Description

The present invention relates to an apparatus for emergency power supply to the starter motor of a motor vehicle as defined in the preamble of claim 1.

It may happen from time to time that the level of charge of a motor vehicle battery is insufficient to allow the engine of the motor vehicle to be started by the starter motor. As is known, in this case it is possible to overcome the problem by connecting the discharged battery, by means of a pair of electrical leads of adequate cross-section provided at their ends with clip-on contact terminals, to an external charged battery, preferably to the battery of a different motor vehicle with the engine running, and therefore with the battery being charged, and by starting the engine by means of the electrical energy provided by the external battery.

In order to carry out this operation, it is necessary to connect the terminal clips of one of the leads, generally black in colour, to the negative terminals of the two batteries, and the terminal clips of the other lead, generally red in colour, to the positive terminals of the batteries. Unfortunately, this operation, which is simple in itself, is not always carried out correctly because, in most batteries on the market, the identification of the positive terminal and the negative terminal is not easy and is made even more uncertain by the dirt normally present inside the engine compartment where the battery is housed. If there is the additional problem that lighting conditions are inadequate, the risk of connecting the two batteries with reversed polarity is much higher. In this case, serious damage can be caused to the batteries and the motor vehicles because of the high currents which pass through the leads. Among other things, overheating owing to the short-circuit current may cause the insulators to melt. Furthermore, even if the polarities are correctly identified, when the fourth and last clip is connected, sparks are produced and often scare the inexperienced operator.

In order to solve these problems, there have been proposed devices which are able to identify the polarities of the batteries and automatically connect the terminals to each other correctly, irrespective of how the leads are initially connected.

However, there is another disadvantage which cannot be overcome either with conventional leads or with known leads with an automatic connection device. Once the batteries are connected to each other, an attempt to start the engine of the motor vehicle which has broken down should not last too long and should be followed by another attempt only after an adequate rest time, otherwise there is the risk of damaging the starter motor and the other components of the electrical starting system. Although automotive manufacturers indicate the limits which must not be exceeded (typically operating the starter motor for 15 consecutive seconds and 60 seconds' rest), it is easy for those indications to be disregarded.

The problem addressed by the present invention is to propose an apparatus for emergency power supply which not only automatically allows a correct connection without any sparks, but also prevents the risks of overloading, as described above.

This problem is solved by the apparatus defined and characterized in general in claim 1.

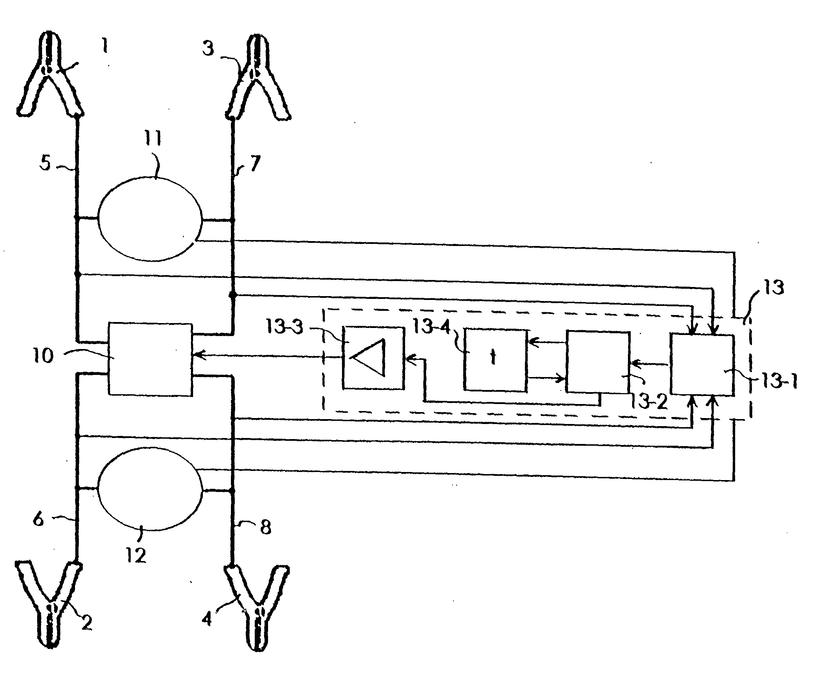

The invention will be better understood from a reading of the following detailed description of one exemplary, and therefore non-limiting, embodiment with reference to the single drawing, in which the single Figure shows a block diagram of the apparatus according to the invention.

In the Figure, a first pair of clip-on terminals 1 and 3 and a second pair of clip-on terminals 2 and 4, which are intended to be coupled to the terminals of the two batteries (not illustrated), are connected by the electrical leads 5 and 7 and 6 and 8, respectively, to a switch 10, for example, a crossed bridge-type switch formed by four power relays. A switch of this type can be selectively switched to three different states: one open and two closed, wherein two input terminals are connected to two output terminals in a direct manner or in a crosswise manner.

Two diode bridge rectifier circuits with stabilizers 11 and 12 are connected to the pair of leads 5 and 7 and to the pair of leads 4 and 8, respectively, in order to receive from one or other battery a stabilized voltage for the supply of an electronic circuit 13. The electronic circuit 13 is depicted by a set comprising a plurality of functional units, in particular a detection unit 13-1, a processing unit 13-2, a control unit 13-3 and a timing unit 13.4. In practice, such a circuit can advantageously be produced with a single microcontroller device.

The four terminals of the switch 10 are connected to the detection unit 13-1 which supplies information on the polarity of the connections of the four terminals to the processing unit 13-2. On the basis of this information, the processing unit 13-2, by way of the control unit 13-3, brings about the activation of one branch or other of the bridge of the switch 10, in order to connect the two batteries to each other with the correct polarity. Advantageously, the polarities will be detected when the switch 10 is in the open state, so that the connection of the four terminals to the batteries will not cause sparks.

The unit 13-1 further detects a transfer of electrical energy from one battery to the other as a result of an attempt to start the engine of the broken-down motor vehicle. This operation is preferably carried out by analysing the difference in potential between the terminals of the switch. A sudden drop in voltage in the active branch of the bridge of the switch 10, which corresponds to the passage of a high current in the leads, indicates that the attempt has begun.

This information is supplied to the processing unit 13-2 which starts a counter of the timing unit 13-4. If the counter reaches a count value corresponding to a predetermined interval of time, for example, 15 seconds, the processing unit 13-2 sends a signal to the control unit 13-3 to bring about the opening of the switch 10. At the same time, the processing unit 13-2 causes another counter of the timing unit 13-4 to start up, which counter has the function of keeping count of the time elapsed since the last start-up attempt. After a predetermined period of time, for example, 60 seconds, the processing unit 13-2 sends to the control unit 13-3 a signal for re-enabling the apparatus by closing the switch 10 and thus allowing another start-up attempt. At the same moment, the counters of the timing unit 13-4 are reset to zero.

Advantageously, the processing unit 13-2 is programmed so that the counters are reset to zero only on reaching the predetermined count value. This means that a start-up attempt having a duration less than the maximum predetermined duration does not impose any waiting time before another attempt is made, and that the times of each successive attempt are totalled in order to cause a safety stoppage only on reaching a total time which is equal to the maximum predetermined period of time. The same applies to the compulsory deactivation time: the periods of inactivity between one attempt and the next are counted and contribute to the calculation of the total rest time.

It is clear from what is set forth above that, with the apparatus according to the invention, the starting of a motor vehicle with a discharged battery can be brought about with maximum safety because an overloading of the circuit is completely avoided.

Although only one embodiment of the invention has been illustrated and described, it is clear that a number of variants and modifications are possible. According to a possible variant, instead of a pair of clip-on terminals, it would be possible to provide a plug-in connector, possibly polarized, for connection to a complementary connector fixed inside the engine compartment and connected permanently to the terminals of the battery of the motor vehicle. According to another variant, the apparatus could be installed inside the engine compartment of the motor vehicle and permanently connected, on the one hand, to the terminals of the battery of the motor vehicle and, on the other hand, to a fixed electrical terminal. This terminal could be constituted by a plug-in connector for coupling to a corresponding connector of a pair of simple emergency leads or by a pair of electrical terminals, for example, similar to the terminals of a battery, for optional connection by means of the normal clip-on terminals of the two emergency leads.

## Claims

1. Apparatus for emergency power supply to the starter motor of a motor vehicle comprising:
a first pair (1, 3) of contact elements which can be connected to the terminals of a first battery,
a second pair (2, 4) of contact elements which can be connected to the terminals of a second battery,
a switch (10) which has a first and a second pair of terminals which are connected by electrical leads (5-8) to the first (1, 3) and second (2, 4) pair of contact elements, respectively, and which can adopt an open state, or one or other of two closed states in which the terminals of the first pair of terminals are connected to the terminals of the second pair of terminals in a direct or crosswise manner, respectively, and
an electronic circuit (13) which is suitable for identifying the polarities of the contact elements when they are connected to the terminals of the batteries, and for selectively setting the switch to one or other of the two closed states in order to connect the contact elements having the same polarity to each other, **characterized in that** the electronic circuit (13) comprises
means (13-1) for detecting the passage through the leads of a current which is greater than a predetermined value, timing means (13-4) which are suitable for keeping count of the time for which a current greater than the predetermined value passes through the leads and
processing means (13-2) and control means (13-3) which are suitable for generating a deactivation signal which sets the switch (10) to the open state when the passage of a current which is greater than the predetermined value lasts longer than a predetermined interval of time.

2. Apparatus according to claim 1, in which the timing means are suitable for keeping count of the time elapsed after a signal for opening the switch and in which the processing means (13-2) and control means (13-3) are suitable for generating a signal for preventing the closure of the switch (10) for a predetermined period of time after a signal for opening the switch.

3. Apparatus according to claim 1 or 2, in which the contact elements comprise four clip-on terminals (1-4).

4. Apparatus according to claim 1 or 2, in which the contact elements of at least one pair are part of a plug-in connector.
